# EUROPÄISCHE PATENTSCHRIFT

(11) **EP 1 462 325 B1**
(45) Veröffentlichungstag und Bekanntmachung des Hinweises auf die Patenterteilung: **06.12.2006**
(21) Anmeldenummer: 04006616.9
(22) Anmeldetag: 19.03.2004
(51) Int. Cl.: B60R 25/00, B60R 25/04, G07C 9/00, E05B 49/00

(54) **Zündschlosssystem für ein Kraftfahrzeug**
Ignition lock system for an automobile
Système de serrure de contact pour véhicule automobile

(30) Priorität: 22.03.2003 DE 10312910
(43) Veröffentlichungstag der Anmeldung: 29.09.2004
(73) Patentinhaber: Marquardt GmbH, 78604 Rietheim-Weilheim (DE)
(72) Erfinder: Müller, Karl, 78628 Rottweil-Neufra (DE); Sachs, Ekkehard, 78549 Spaichingen (DE)
(74) Vertreter: Eisele, Otten, Roth & Dobler

(56) Entgegenhaltungen:
- EP-A- 1 026 054
- EP-A- 1 193 147
- DE-A1- 19 814 964
- DE-C1- 19 504 991

## Beschreibung

Die Erfindung betrifft einen elektronischen Zündstartschalter nach dem Oberbegriff des Patentanspruchs 1.

In Kraftfahrzeugen befindet sich bei hohen Sicherheitsanforderungen ein elektronisches Zündschloßsystem, das dem Schutz gegen unbefugte Benutzung des Kraftfahrzeugs dient.

Ein derartiges Zündschloßsystem umfaßt einen in der Art eines ID-Gebers, einer Chipkarte, eines Zündschlüssels o. dgl. ausgebildeten elektronischen Schlüssel, einen elektronischen Zündstartschalter sowie eine gegebenenfalls im Zündstartschalter befindliche Sende-/Empfangseinheit. Der Schlüssel und der Zündstartschalter wirken zusammen, indem zwischen dem Schlüssel und der Sende-/Empfangseinheit ein einen elektronischen Code enthaltendes Signal austauschbar ist. In herkömmlicher Weise bewirkt ein solches Zündschloßsystem die Fahrberechtigung des Kraftfahrzeugs in der Art einer Schlüsselbetätigung, indem der Zündstartschalter vom Benutzer mit Hilfe des Schlüssels bedienbar ist. Alternativ oder auch ergänzend kann das Zündschloßsystem die Fahrberechtigung des Kraftfahrzeugs in der Art einer KeylessGo-Funktionalität gestatten, wobei es genügt, daß der Benutzer den Schlüssel mit sich führt.

Aus der DE 198 14 964 A1 ist ein Zündstartschalter bekannt, an dessen Frontblende die Einführung des elektronischen Schlüssels ermöglicht ist. Desweiteren ist in der Frontblende ein manuell bewegbares Betätigungsorgan angeordnet, das als eine in wenigstens eine Betätigungsrichtung verschwenkbare Wippe ausgebildet ist. Durch die Betätigung des Betätigungsorgans wird bei positiver Auswertung des ausgetauschten elektronischen Codes wenigstens eine vom Zündstartschalter bewirkbare Funktion, wie das Einschalten von Verbrauchern im Kraftfahrzeug, der Betrieb des Kraftfahrzeugs, das Starten des Kraftfahrzeugs o. dgl., freigegeben und/oder ausgelöst. Nachteilig bei diesem Zündstartschalter ist dessen großer Platzbedarf bezüglich der Frontblende.

Der Erfindung liegt die Aufgabe zugrunde, den Zündstartschalter in kompakter Bauweise auszugestalten, und insbesondere die Betätigung des Zündschloßsystems weiterzuentwickeln.

Diese Aufgabe wird bei einem gattungsgemäßen Zündstartschalter durch die kennzeichnenden Merkmale des Anspruchs 1 gelöst.

Beim erfindungsgemäßen elektronischen Zündstartschalter besitzt das Betätigungsorgan eine Aufnahme für den elektronischen Schlüssel, derart daß der elektronische Schlüssel an der Aufnahme in den Zündstartschalter einführbar ist. Vorteilhafterweise besitzt dieser Zündstartschalter einen verringerten Platzbedarf und läßt sich in einfacher Art und Weise in einem Zündschloßsystem für die Fahrberechtigung des Kraftfahrzeugs in der Art einer KeylessGo-Funktionalität und/oder für die Fahrberechtigung des Kraftfahrzeugs in der Art einer Schlüsselbetätigung verwenden. Weitere Ausgestaltungen der Erfindung sind Gegenstand der Unteransprüche.

Das Betätigungsorgan kann durch Bewegung in Betätigungsrichtung aus einer Ausgangsstellung bis in eine Betätigungsstellung verstellbar ausgestaltet sein. Es bietet sich dann an, daß das Betätigungsorgan in der Betätigungsstellung schaltend auf einen elektrischen Schalter einwirkt. Das Schaltsignal dieses Schalters dient dann zur Freigabe und/oder Auslösung für die vom Zündstartschalter bewirkbare Funktion.

Vom Benutzer als besonders ergonomisch empfunden wird es, wenn das Betätigungsorgan aus der Betätigungsstellung selbständig in die Ausgangsstellung rückstellbar ist. Hierfür bietet es sich an, daß die Rückstellung mittels eines auf das Betätigungsorgan einwirkenden elastischen Elements bewirkt wird. In einfacher und dennoch funktionssicherer Art kann das elastische Element aus einer durch eine Druckfeder belasteten Kugel bestehen, die wiederum über eine Nase mit dem Betätigungsorgan zusammenwirkt.

Für die Bedienung des Zündstartschalters durch den Benutzer bieten sich nachfolgende Bewegungsabläufe an. Zum einen kann die Bewegung des Betätigungsorgans durch den Benutzer in Betätigungsrichtung den Motor des Kraftfahrzeugs starten und die Bewegung des Betätigungsorgans durch den Benutzer in dieselbe Betätigungsrichtung den Motor des Kraftfahrzeugs stoppen. Zum anderen kann ebenfalls die Bewegung des Betätigungsorgans durch den Benutzer in Betätigungsrichtung den Motor des Kraftfahrzeugs starten, jedoch für das Abstellen des Motor des Kraftfahrzeugs die Bewegung des Betätigungsorgans durch den Benutzer in die Gegenrichtung zur Betätigungsrichtung erforderlich sein.

Um ein Eindringen von Staub, Schmutz, Feuchtigkeit o. dgl. in den Zündstartschalter zu verhindern, ist zweckmäßigerweise die im Betätigungsorgan befindliche Aufnahme mittels einer Verschlußklappe verschließbar.

Aus Sicherheitsgründen kann im Zündstartschalter eine Verriegelungseinrichtung befindlich sein, derart daß der in die Aufnahme eingeführte elektronische Schlüssel nach Starten des Motors des Kraftfahrzeugs von der Verriegelungseinrichtung gegen Entnahme aus der Aufnahme gesperrt ist. Erst nach Abstellen des Motors des Kraftfahrzeugs ist dann der Schlüssel wiederum zur Entnahme aus der Aufnahme freigegeben. In zweckmäßiger und dennoch einfacher Ausgestaltung weist die Verriegelungseinrichtung einen Schlüssel-Rasthebel auf, der in eine Rasttasche am Schlüssel zur Verriegelung des Schlüssels eingreifen kann. Mit dem Schlüssel-Rasthebel wirkt wiederum ein Rastschieber, ein Rastsperrhebel sowie eine Blattfeder zusammen.

Um den sogenannten Shiftlock bei einem Kraftfahrzeug mit Automatikgetriebe zu realisieren, ist im Zündstartschalter ein Magnet zum Entriegeln der Verriegelungseinrichtung angeordnet. Mit Hilfe des entsprechend ansteuerbaren Magneten ist der Schlüssel bei einem Automatikgetriebe nach Einlegen der Parkstellung P am Wählhebel zur Entnahme aus der Aufnahme freigegeben. In einfacher Art und Weise wirkt der Magnet auf den Rastschieber ein, wobei seinerseits auf den Rastschieber zusätzlich eine Rückstellfeder einwirken kann.

Es bietet sich an, im Zündstartschalter eine Leiterplatte zur Aufnahme des Schalters für die Betätigungsstellung anzuordnen. Auf der Leiterplatte können dann noch weitere Schalter, wie ein Schlüsselabzugsschalter, ein Schlüssel steckt-Schalter o. dgl., befindlich sein. Zur Schonung der Batterie im Schlüssel kann eine induktive Übertragung von Energie vom Zündstartschalter auf den Schlüssel vorgenommen werden, wenn sich dieser in der Aufnahme befindet. In diesem Fall befindet sich zweckmäßigerweise auf der Leiterplatte eine Energieübertragungsspule. Schließlich kann weiter auf der Leiterplatte ein Sender/Empfänger zum Austausch des Codes zwischen dem Schlüssel und der Sende-/Empfangseinheit angebracht sein. Zum besonders funktionssicheren Austausch des Codes läßt sich ein im Zündstartschalter befindlicher Lichtleiter sowie ein Infrarot-Sender/Empfänger verwenden.

Ebenso befindet sich zweckmäßigerweise im Schlüssel eine Leiterplatte. Auf dieser Leiterplatte sind dann die elektrischen und/oder elektronischen Bauteile, wie ein Mikroprozessor, Infrarot-Sender/Empfänger, eine Energiespule zur Energieübertragung, XYZ-Spulen zur Ortsbestimmung, HF-Sender/Empfänger, eine Batterie o. dgl., angeordnet.

Die mit der Erfindung erzielten Vorteile bestehen insbesondere darin, daß der Zündstartschalter in einfacher und intuitiver Art und Weise vom Benutzer zu betätigen ist. Die Betätigung des Zündstartschalters wird vom Benutzer ergonomisch empfunden. Dabei ist sowohl der Zündstartschalter als auch das diesen verwendende Zündschloßsystem einfach und kostengünstig ausgestaltet. Außerdem ist das Zündschloßsystem trotz hoher Funktionalität sehr robust und fehlerunanfällig. Der Zündstartschalter sowie das zugehörige Zündschloßsystem lassen sich trotz hoher Funktionalität und Sicherheit sehr kompakt ausgestalten und sind daher auch in beengten Einbauräumen im Kraftfahrzeug gut unterzubringen. Schließlich ist auch ein Notbetrieb des Zündschloßsystems möglich, wenn beispielsweise die Batterie im elektronischen Schlüssel leer ist.

Ein Ausführungsbeispiel der Erfindung mit verschiedenen Weiterbildungen und Ausgestaltungen ist in den Zeichnungen dargestellt und wird im folgenden näher beschrieben. Es zeigen
- Fig. 1: ein mit einem Schließsystem ausgestattetes Kraftfahrzeug,
- Fig. 2: ein schematisches Blockschaltbild des Schließsystems mit einem Diagramm zur Übertragung der Signale,
- Fig. 3: einen Zündstartschalter in perspektivischer Ansicht,
- Fig. 4: das Betätigungsorgan des Zündstartschalters mit eingestecktem Schlüssel,
- Fig. 5: den Zündstartschalter, von der Rückseite gesehen, mit Mitteln zur Befestigung im Kraftfahrzeug,
- Fig. 6a: den Zündstartschalter im Längsschnitt von der einen Seite gesehen,
- Fig. 6b: den Zündstartschalter im Längsschnitt von der anderen Seite gesehen,
- Fig. 6c: den Zündstartschalter in einem weiteren Längsschnitt von der anderen Seite gesehen,
- Fig. 7a: den Zündstartschalter mit geöffnetem Gehäuse in einer perspektivischen Ansicht,
- Fig. 7b: den Zündstartschalter mit geöffnetem Gehäuse in einer anderen perspektivischen Ansicht,
- Fig. 8a: den Zündstartschalter in einem weiteren Längsschnitt,
- Fig. 8b: den Zündstartschalter in dem weiteren Längsschnitt, wobei der Schlüssel eingeführt ist,
- Fig. 9: die Leiterplatte des Zündstartschalters,
- Fig. 10: den Schlüssel in einer perspektivischen Ansicht von der Oberseite
- Fig. 11: den Schlüssel in einer perspektivischen Ansicht von der Unterseite und
- Fig. 12: die Leiterplatte des Schlüssels.

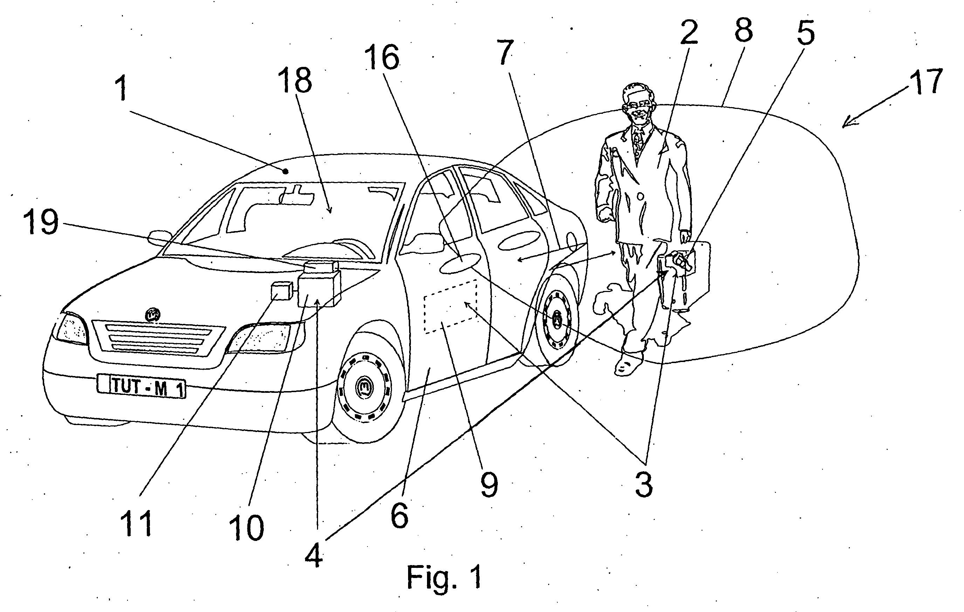

In Fig. 1 ist ein Kraftfahrzeug 1 mit dem berechtigten Benutzer 2 zu sehen. Das Kraftfahrzeug 1 ist mit einem Schließsystem versehen, das ein für die Zugangsberechtigung dienendes Türschließsystem 3 sowie ein die Fahrberechtigung feststellendes Zündschloßsystem 4 umfaßt. Zugehörig sowohl zum Türschließsystem 3 als auch zum Zündschloßsystem 4 ist ein in der Art eines ID-Gebers, einer Chipkarte, einer Smartcard, eines Zündschlüssels o. dgl. ausgebildeter elektronischer Schlüssel 5.

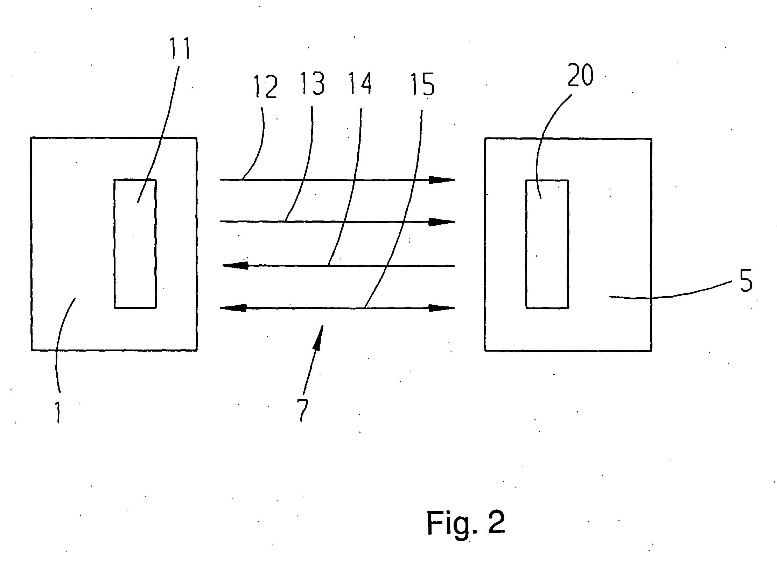

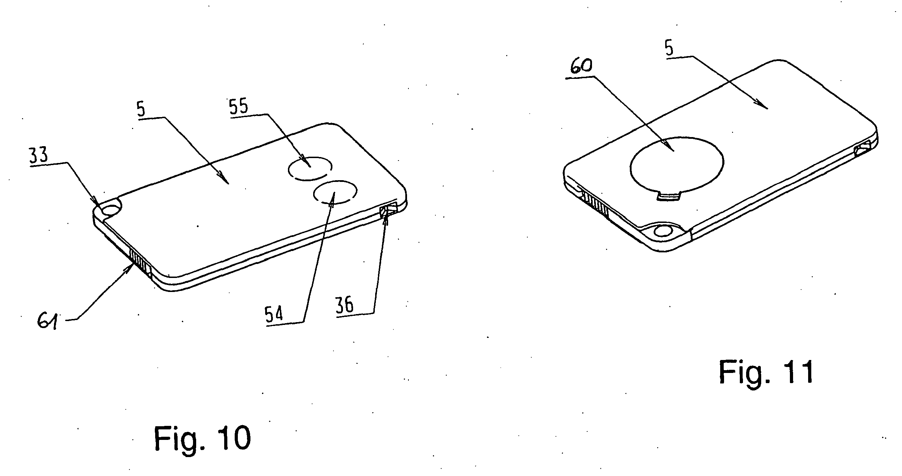

Der elektronische Schlüssel 5 befindet sich im Besitz des berechtigten Benutzers 2, womit dieser innerhalb eines Wirkbereichs 8 bedienungsunabhängig Zugang zum Kraftfahrzeug 1 besitzt. Hierzu besitzt ein in Fig. 1 schematisch angedeutetes kraftfahrzeugseitiges Steuergerät 9 für das Türschließsystem 3 wenigstens zwei Zustände, wobei im ersten Zustand eine Verriegelung und im zweiten Zustand eine Entriegelung der Autotüren 6 vorliegt. Zum bestimmungsgemäßen Betrieb des Türschließsystems 3 sind im Kraftfahrzeug 1 und im Schlüssel 5 Sendemittel und/oder Empfangsmittel für elektromagnetische Signale 7 angeordnet, beispielsweise eine Sende-/Empfangseinheit 11 im Kraftfahrzeug 1 sowie ein Sender/Empfänger 20 (siehe Fig. 2) im Schlüssel 5. Bei wenigstens einem dieser zwischen dem Schlüssel 5 und dem Kraftfahrzeug 1 übertragenen Signale 7 handelt es sich um ein als elektronischer Code dienendes, codiertes elektromagnetisches Betriebssignal 15 (siehe Fig. 2). Dieser Code dient zur Authentikation des Schlüssels 5, womit bei berechtigtem Schlüssel 5 nach positiver Auswertung des übertragenen Codes eine Änderung des Zustandes des Steuergerätes 9 bewirkbar ist. Die Übertragung des codierten Betriebssignals 15 erfolgt dann, wenn der sich im Außenraum 17 des Kraftfahrzeugs 1, und zwar im Wirkbereich 8 befindliche, berechtigte Benutzer 2 den Türgriff 16 an der Autotüre 6 betätigt oder sich dem Türgriff 16 annähert. Dadurch wird die Entriegelung der Autotüren 6 entsprechend der KeylessEntry-Funktionalität ausgelöst. Ebensogut kann die Übertragung des Codes auch selbsttätig ohne Mitwirkung des Benutzers 2 erfolgen, sobald dieser den Wirkbereich 8 betritt, was jedoch im folgenden nicht näher betrachtet wird. Schließt der Benutzer 2 die Autotüren 6 von außen, so erfolgt eine selbsttätige Verriegelung der Autotüren 6. Ebensogut kann die selbsttätige Verriegelung der Autotüren 6 erfolgen, nachdem der Benutzer den Wirkbereich 8 verlassen hat. Im übrigen ist neben der KeylessEntry-Funktionalität auch noch eine fembedienbare Ent- sowie Verriegelung der Autotüren 6 möglich, die mittels in Fig. 10 sichtbarer Tasten 54, 55 am Schlüssel 5 durch den Benutzer 2 auslösbar ist, um dem Benutzer eine bedienungsabhängige Zugangsberechtigung zum Kraftfahrzeug zu gestatten.

Das Zündschloßsystem 4 zur Feststellung der bedienungsunabhängigen Fahrberechtigung für das Kraftfahrzeug 1 umfaßt einen elektronischen Zündstartschalter 10, der mit Sendemittel und/oder Empfangsmittel für elektromagnetische Signale 7 zur Zusammenwirkung mit dem zugehörigen elektronischen Schlüssel 5 versehen ist. Die Sende- und/oder Empfangsmittel bestehen vorliegend aus der mit dem Zündstartschalter 10 in Verbindung stehenden Sende-/Empfangseinheit 11. Gegebenenfalls kann die Sende-/Empfangseinheit 11 auch direkt im Zündstartschalter 10 befindlich sein. Weiter weist der Zündstartschalter 10 ein Betätigungsorgan 19 auf. Die Übertragung des den Code enthaltenden Betriebssignals 15 (siehe Fig. 2) zur Authentikation der zweiten Einrichtung 5 erfolgt dann, wenn der berechtigte Benutzer 2 sich im Innenraum 18 des Kraftfahrzeugs 1 befindet und das Betätigungsorgan 19 betätigt. Bei positiver Auswertung des zwischen der Sende-/Empfangseinheit 11 und dem Schlüssel 5 ausgetauschten elektronischen Codes 15 wird dadurch wenigstens eine vom Zündstartschalter 10 bewirkbare Funktion, wie das Einschalten von Verbrauchern im Kraftfahrzeug 1, der Betrieb des Kraftfahrzeugs 1, das Starten des Kraftfahrzeugs 1 o. dgl., entsprechend der KeylessGo-Funktionalität freigegeben und/oder ausgelöst.

Die nähere Funktionsweise des Türschließsystems 3 sowie Zündschloßsystems 4 soll nun anhand der Fig. 2 erläutert werden. Nach Betätigung des Türgriffs 16 oder des Betätigungsorgans 19 sendet eines der Sende- und/oder Empfangsmittel im Kraftfahrzeug 1 zunächst ein als Wecksignal bezeichnetes elektromagnetisches Signal 12 für den zugehörigen Schlüssel 5. Dadurch wird der Schlüssel 5 aus einem Ruhezustand mit verringertem Energiebedarf in einen aktivierten Zustand für den bestimmungsgemäßen Betrieb übergeführt. Danach sendet eines der Sende- und/oder Empfangsmittel im Kraftfahrzeug 1 wenigstens ein weiteres elektromagnetisches Signal 13, das nachfolgend auch als Bereichsabgrenzungssignal bezeichnet ist. Dadurch kann der zugehörige Schlüssel 5 dessen Standort in Bezug auf das Kraftfahrzeug 1 bestimmen. Insbesondere läßt sich feststellen, ob der Schlüssel 5 im Außenraum 17 des Kraftfahrzeugs 1 sowie gegebenenfalls an welcher Stelle und/oder im Innenraum 18 des Kraftfahrzeugs 1 befindlich ist. Nachfolgend sendet der Schlüssel 5 ein die Information zum ermittelteten Standort beinhaltendes weiteres Signal 14, das im folgenden auch als Rückantwortsignal bezeichnet ist, zu einem der Sende- und/oder Empfangsmittel im Kraftfahrzeug 1. Schließlich wird dann, wie bereits beschrieben, das codierte elektromagnetische Betriebssignal 15 zur Authentikation zwischen dem Kraftfahrzeug 1 und dem Schlüssel 5 übertragen. Das Signal 15 kann insbesondere aus mehreren Teilsignalen bestehen und in einer bidirektionalen Kommunikation zwischen dem Kraftfahrzeug 1 und dem Schlüssel 5 übertragen werden. Im Hinblick auf nähere Einzelheiten zur bidirektionalen Kommunikation an sich wird auch auf die DE 43 40 260 A1 verwiesen. Bei den Sende- und/oder Empfangsmitteln im Kraftfahrzeug 1 kann es sich um die in Fig. 2 gezeigte Sende-/Empfangseinheit 11 und/oder um sonstige, an zweckmäßiger Stelle im Kraftfahrzeug 1 befindliche Einrichtungen handeln. Bei den Sende- und/oder Empfangsmitteln im Schlüssel 5 kann es sich um den in Fig. 2 gezeigten Sender/Empfänger 20 handeln.

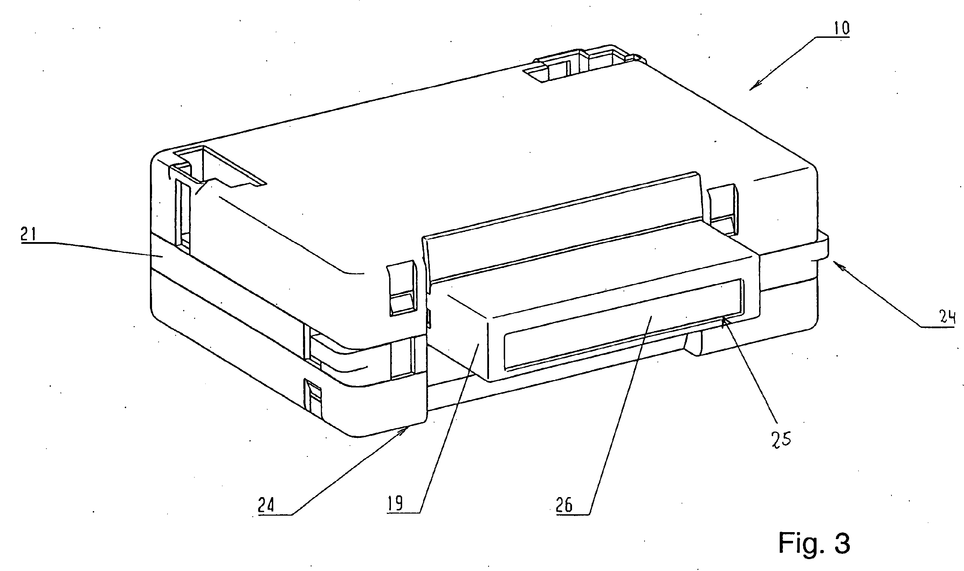

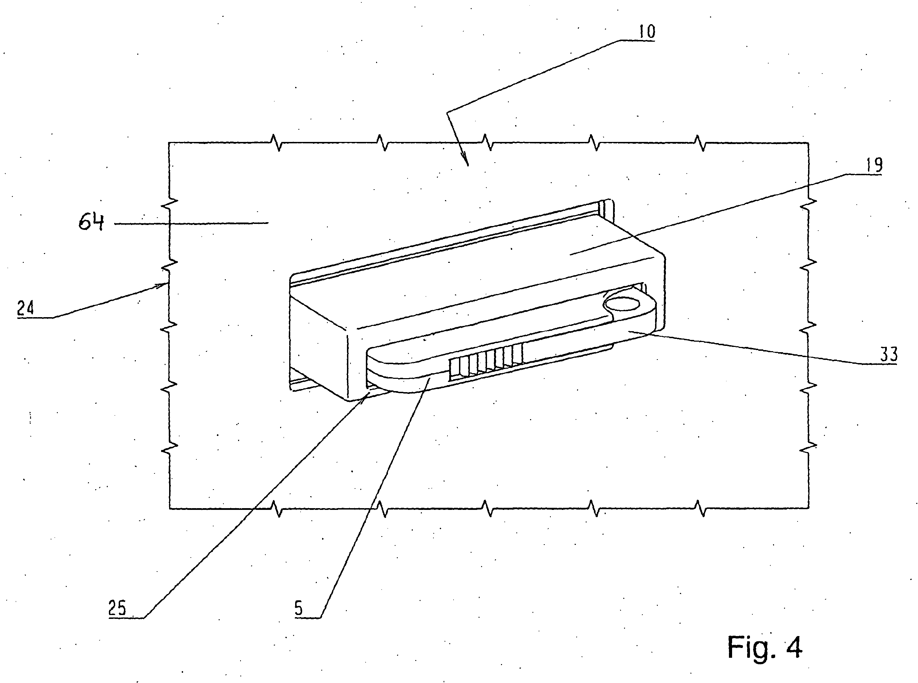

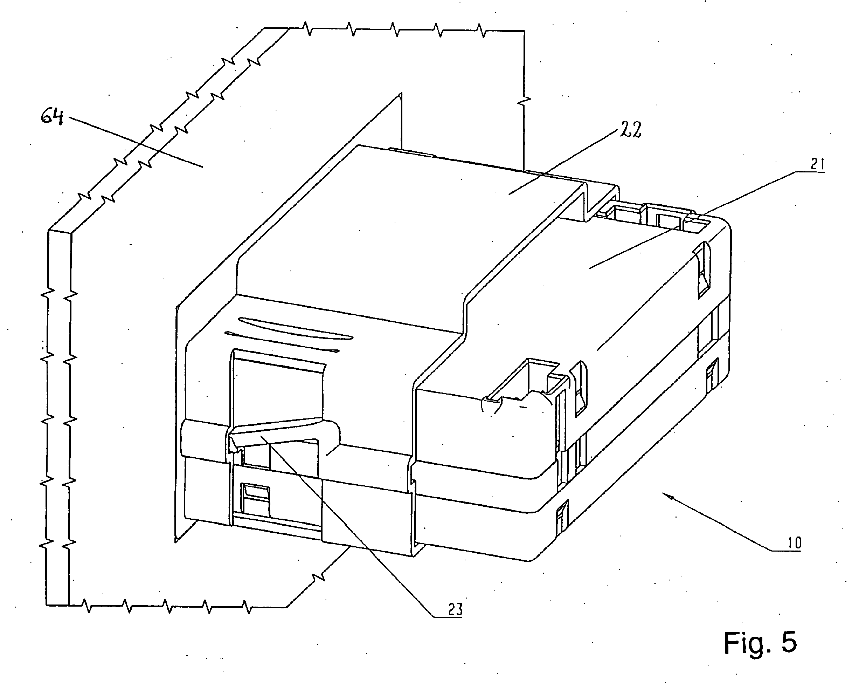

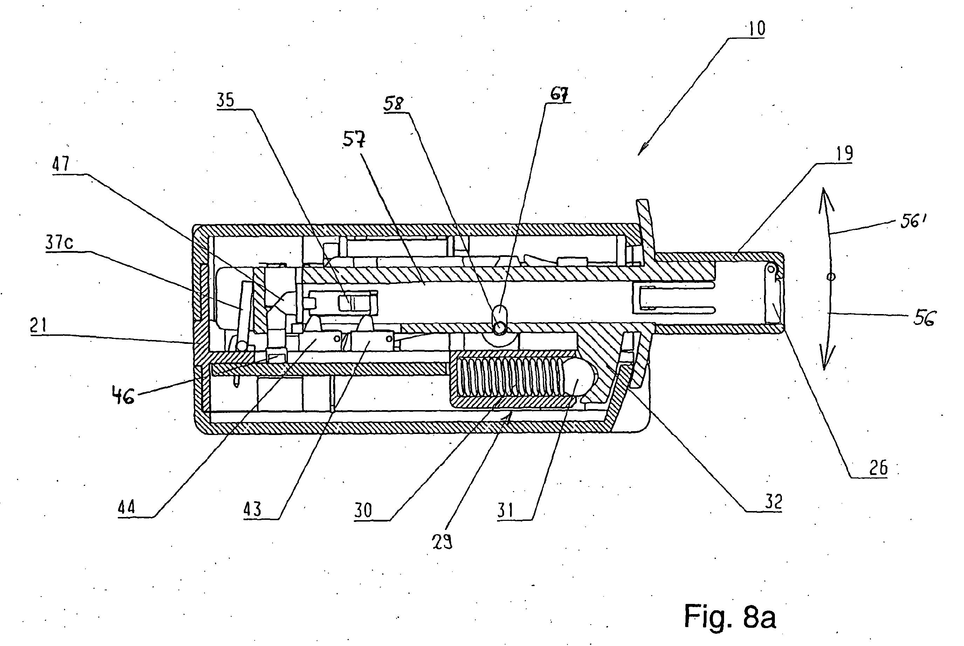

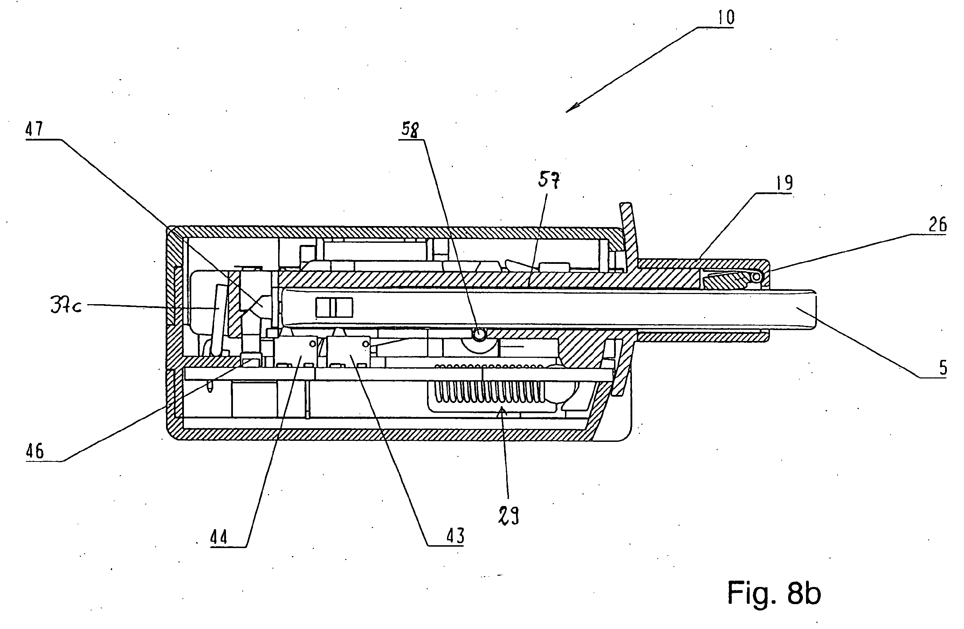

Der im Armaturenbrett 64, in der Mittelkonsole oder an sonstiger geeigneter Stelle im Kraftfahrzeug 1 angeordnete elektronische Zündstartschalter 10 ist näher in den Fig. 3 bis 9 zu sehen. Wie anhand von Fig. 5 zu erkennen ist, besitzt der Zündstartschalter 10 ein Gehäuse 21, das mittels einer Halterung 22 sowie eines Rastarms 23 im Kraftfahrzeug 1 befestigt ist. Das Betätigungsorgan 19 des Zündstartschalters 10 befindet sich für den Benutzer 2 zugänglich an der Frontseite 24 des Gehäuses 21, was näher aus Fig. 3 hervorgeht. Das Betätigungsorgan 19 besitzt eine für den elektronischen Schlüssel 5 bestimmte Aufnahme 25, die mittels einer Verschlußklappe 26 verschließbar ist, wie anhand eines Vergleichs der Fig. 8a und 8b zu erkennen ist. Der elektronische Schlüssel 5 ist an der Aufnahme 25 des Betätigungsorgans 19 in einen Schacht 57 (siehe Fig. 8b) in den Zündstartschalter 10 einführbar, was in der Fig. 4 gezeigt ist, um so eine bedienungsabhängige Fahrberechtigung in der Art einer Schlüsselbetätigung für das Kraftfahrzeug 1 zu gestatten.

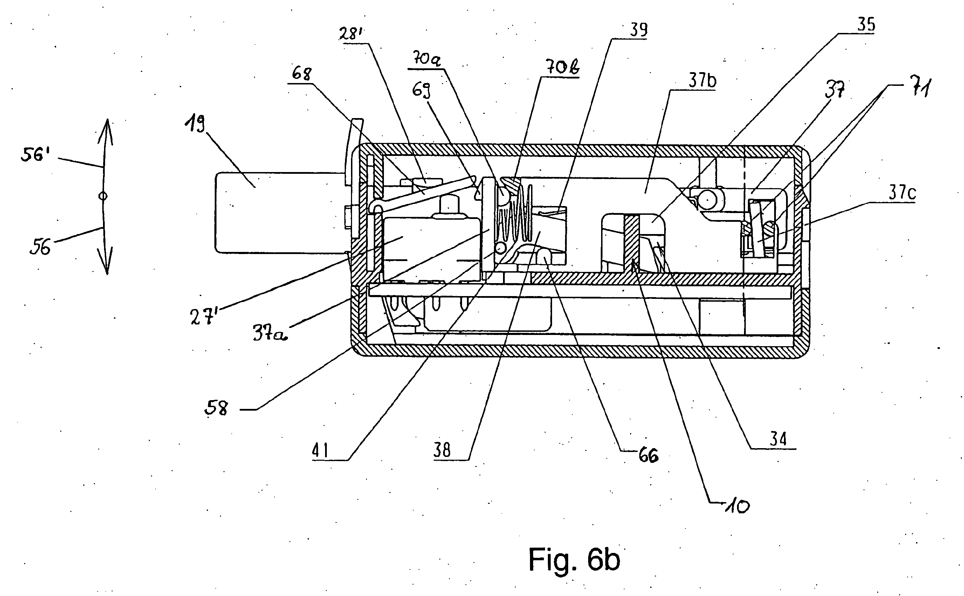

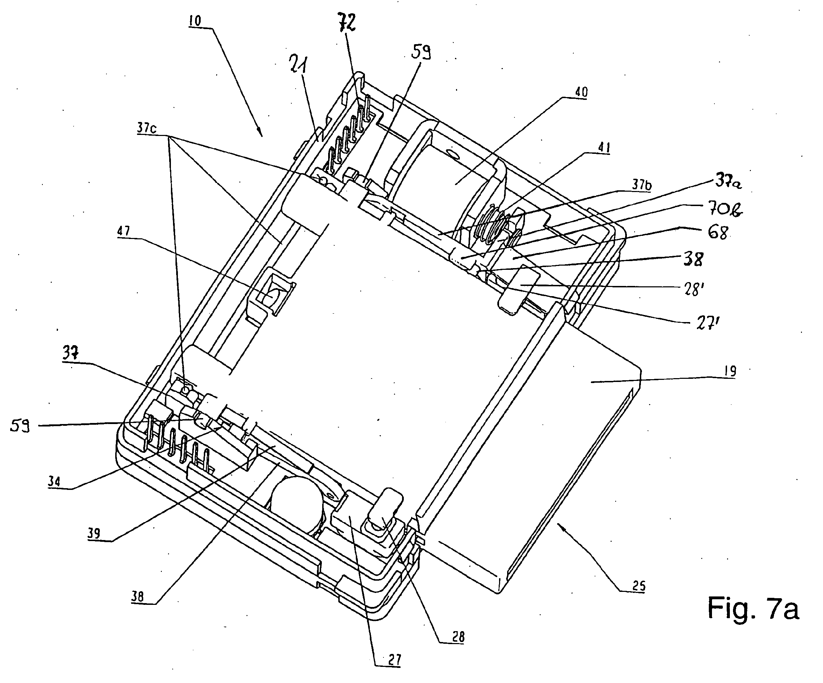

Wie aus Fig. 7a und 8a hervorgeht, ist das Betätigungsorgan 19 als manuell bewegbare Wippe ausgebildet, die insbesondere in wenigstens eine Betätigungsrichtung 56 um ein Drehlager 59 verschwenkbar ist. Im Gehäuse 21 des Zündstartschalters 10 befindet sich ein elektrischer Schalter 27. Das Betätigungsorgan 19 ist mitsamt dem Schacht 57 durch Bewegung in Betätigungsrichtung 56 aus einer Ausgangsstellung bis in eine Betätigungsstellung manuell verstellbar, beispielsweise indem der Benutzer 2 auf das Betätigungsorgan 19 drückt. In der Betätigungsstellung wirkt das Betätigungsorgan 19 mittels eines Ansatzes 28 schaltend auf den elektrischen Schalter 27 ein. Gleichzeitig wird auf der gegenüberliegenden Seite des Zündstartschalters 10 bei der Bewegung in Betätigungsrichtung 56 mittels des Ansatzes 28' über einen Schalthebel 68 ein weiterer elektrischer Schalter 27' geschaltet, wie der Fig. 6b zu entnehmen ist. Das Schaltsignal des Schalters 27 und/oder des Schalters 27' wird dann zur Auslösung der entsprechenden Funktion im Kraftfahrzeug 1 verwendet. Im Gegensatz zum Schalter 27 bleibt der Schalter 27' auch nach Rückkehr des Betätigungsorgans 19 aus der Betätigungsstellung in die Ausgangsstellung geschaltet, da der Schalthebel 68 von der Sperrnase 69 am Rastschieberteil 37a eines Rastschiebers 37 festgehalten ist. Somit kann das Schaltsignal des Schalter 27' als Erkennung für den Betrieb des Kraftfahrzeugs 1 herangezogen werden.

Das Betätigungsorgan 19 ist aus der Betätigungsstellung selbständig in die Ausgangsstellung rückstellbar, sobald der Benutzer 2 das Betätigungsorgan 19 wieder losläßt. Die Rückstellung des Betätigungsorgans 19 mitsamt dem Schacht 57 wird mittels eines auf das Betätigungsorgan 19 einwirkenden elastischen Elements 29 bewirkt wird, wie anhand von Fig. 8a zu sehen ist. Das elastische Element 29 besteht aus einer durch eine Druckfeder 30 belasteten Kugel 31. Die Kugel 31 wirkt zur Rückstellung über eine Nase 32 mit dem Betätigungsorgan 19 zusammen.

Die Wirkungsweise des Zündstartschalters 10 ist nun wie folgt. Die Bewegung des Betätigungsorgans 19 durch den Benutzer 2 in Betätigungsrichtung 56, also beispielsweise durch Drücken auf das Betätigungsorgan 19, startet den Motor des Kraftfahrzeugs 1, wenn eine positive Authentikation des Schlüssel 5 erfolgt ist. Läuft der Motor, so stoppt die Bewegung des Betätigungsorgans 19 durch den Benutzer in dieselbe Betätigungsrichtung 56, also beispielsweise durch erneutes Drücken auf das Betätigungsorgan 19, den Motor des Kraftfahrzeugs 1 wieder. Die Betätigung des Zündstartschalters 10 erfolgt somit in der Art einer Push-Push-Betätigung. Alternativ kann eine Push-Pull-Betätigung vorgesehen sein, wobei die Bewegung des Betätigungsorgans 19 durch den Benutzer 2 in Betätigungsrichtung 56 den Motor des Kraftfahrzeugs 1 startet und die spätere Bewegung des Betätigungsorgans 19 durch den Benutzer 2 in die Gegenrichtung 56' zur Betätigungsrichtung, also beispielsweise durch Ziehen des Betätigungsorgans 19, den Motor des Kraftfahrzeugs 1 abstellt. Einzelheiten zu dieser Push-Pull-Betätigung sind nachfolgend noch näher erläutert.

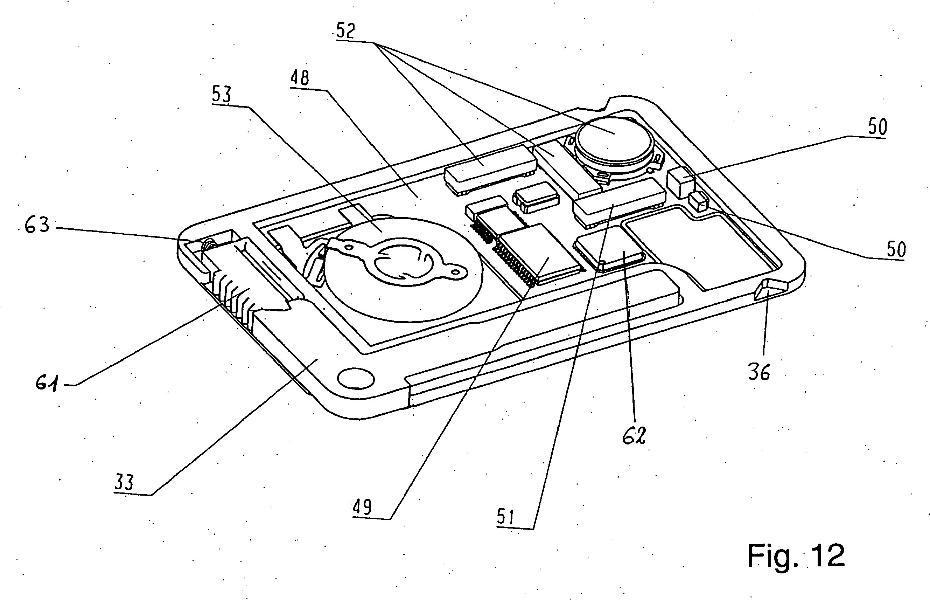

Wie ausgeführt, besitzt das Türschließsystem 3 eine KeylessEntry-Funktionalität und das Zündschloßsystem 4 eine KeylessGo-Funktionalität, so daß es genügt, daß der Benutzer 2 den Schlüssel 5 bei sich trägt. Ist jedoch die in Fig. 12 sichtbare Batterie 53 des Schlüssels 5 erschöpft, so ist aufgrund mangelnder Betriebsfähigkeit der Sender/Empfänger 20 im Schlüssel 5 keine Übertragung der Signale 7 zwischen dem Schlüssel 5 und dem Kraftfahrzeug 1 möglich. Für diesen Fall ist bis zum Austausch der Batterie 53, wozu der in Fig. 11 sichtbare Deckel 60 am Schlüssel 5 zu öffnen ist, wie folgt vorgesorgt. Zum einen ist am Schlüssel 5, wie in Fig. 10 oder Fig. 12 zu sehen ist, ein mechanischer Notschlüssel 33 eingesteckt. Dieser Notschlüssel 33 kann bei Bedarf aus dem Schlüssel 5 durch Betätigung der Verrastung 61 gegen eine in Fig. 12 sichtbare Feder 63 herausgezogen werden, so daß ein an einer Autotüre 6 angebrachtes mechanisches Türschloß geöffnet werden kann, um dem Benutzer 2 Zugang zum Kraftfahrzeug 1 zu ermöglichen. Zum anderen bietet der Zündstartschalter 10 eine direkte Betätigungsmöglichkeit, was mit der Fahrberechtigung in der Art einer Schlüsselbetätigung bezeichnet ist. Dazu ist der Schlüssel 5 in die Aufnahme 25 einzuführen, wie in Fig. 4 gezeigt ist, wonach dann eine Energieübertragung vom Zündstartschalter 10 auf den Schlüssel 5 zum Betrieb der Sender/Empfänger 20 im Schlüssel 5 erfolgt. Folglich kann dann der Austausch der Signale 7 wieder stattfinden und nach erfolgreicher Authentikation der Motor des Kraftfahrzeugs 1 durch Bewegung des Betätigungsorgans 19 mitsamt dem eingeführten Schlüssel 5 gestartet werden.

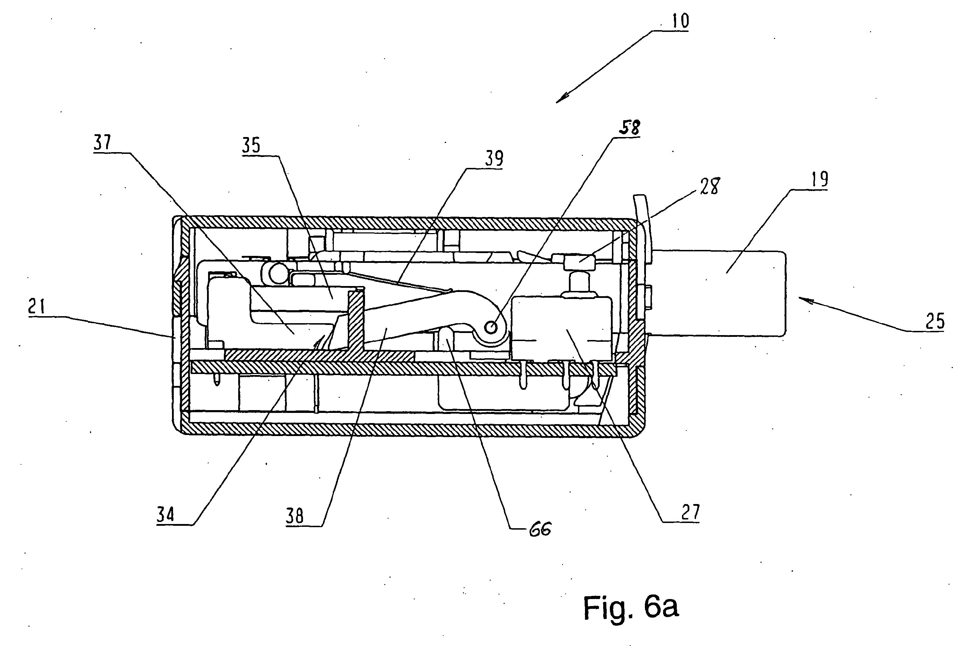

Bei der direkten Betätigung des Zündstartschalters 10 ist es aus Sicherheitsgründen notwendig, daß der Schlüssel 5 während des Betriebs des Kraftfahrzeugs 1 nicht aus der Aufnahme 25 herausgenommen werden kann. Hierfür ist im Zündstartschalter 10 eine Verriegelungseinrichtung 34 befindlich, die in Fig. 6a bis 8b für die Push-Pull-Version gezeigt ist, derart daß der in die Aufnahme 25 eingeführte, im Schacht 57 befindliche elektronische Schlüssel 5 nach Starten des Motors des Kraftfahrzeugs 1 von der Verriegelungseinrichtung 34 gegen Entnahme aus der Aufnahme 25 gesperrt sowie nach Abstellen des Motors des Kraftfahrzeugs 1 zur Entnahme aus der Aufnahme 25 freigegeben ist.

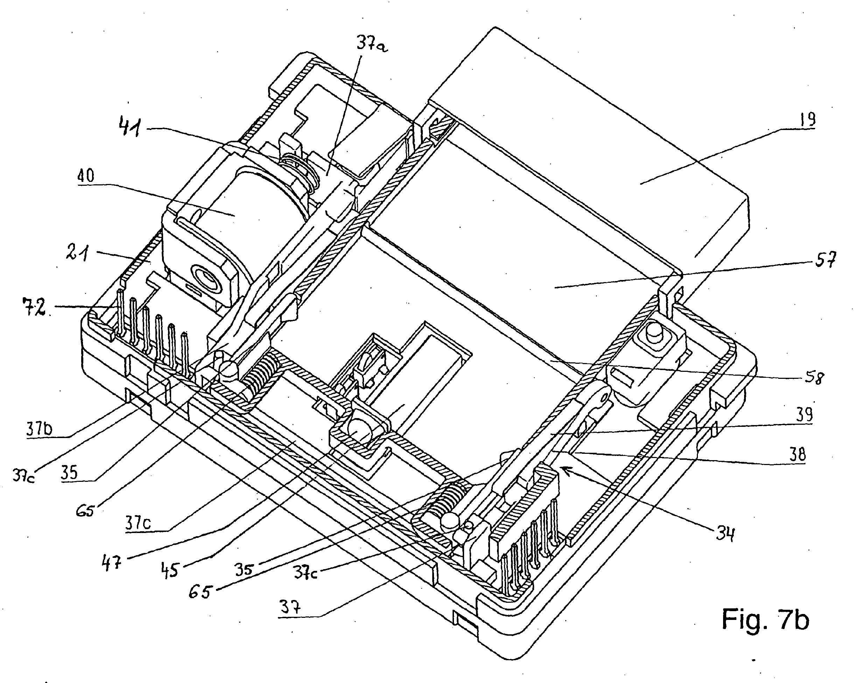

Wie in Fig. 7b zu sehen ist, weist die Verriegelungseinrichtung 34 einen Schlüssel-Rasthebel 35 auf, der mittels einer Druckfeder 65 verschwenkbar gelagert ist und in eine in Fig. 10 sichtbare Rasttasche 36 zur Verriegelung des Schlüssels 5 eingreifen kann. Mit dem Schlüssel-Rasthebel 35 wirkt gemäß Fig. 6a ein Rastschieber 37, ein an einer Drehachse 58 verschwenkbar gelagerter Rastsperrhebel 38 sowie eine Blattfeder 39 zusammen.

Ist der Schlüssel 5 gemäß Fig. 8b im Schacht 57 befindlich, so wird die Drehachse 58 bei Betätigung des Betätigungsorgans 19 in Betätigungsrichtung 56 vom Schlüssel 5 festgehalten. Dadurch kann die Drehachse 58 nicht ausweichen und der Rastsperrhebel 38 wird durch einen in Fig. 6b gezeigten Zapfen 66 nach oben gegen die Kraft der Blattfeder 39 verschwenkt. Der entsprechend nach oben verschwenkte Rastsperrhebel 38 liegt nunmehr gemäß Fig. 7b seitlich am Schlüssel-Rasthebel 35 an, womit dieser am Ausschwenken gegen die Kraft der Druckfeder 65 gehindert ist. Damit ist die Entnahme des Schlüssels 5 aus dem Schacht 57 folglich gesperrt, und zwar auch nach Rückkehr des Betätigungsorgans 19 aus der Betätigungsstellung in die Ausgangsstellung, denn dann verhindert der Rastschieber 37 durch Abstützung des Rastsperrhebels 38 dessen Rückschwenken. Gleichzeitig ist der in Fig. 6b gezeigte Schalthebel 68 von der Sperrnase 69 am Rastschieberteil 37a des Rastschiebers 37 festgehalten, wie bereits weiter oben ausgeführt ist.

Zum Lösen der Verriegelungseinrichtung 34 wird bei der Push-Pull-Version das Betätigungsorgan 19 nunmehr in die Gegenrichtung 56' verschwenkt. Dadurch gibt entsprechend Fig. 6b die Sperrnase 69 den Schalthebel 68 frei, so daß der Schalter 27' ausschaltet, wobei der Schalthebel 68 zurückgestellt wird. Wird anschließend das Betätigungsorgan 19 losgelassen, so kehrt dieses wiederum in die Ausgangsstellung zurück, wobei das ansatzförmige Rastschieberteil 37a mitsamt einem weiteren, seitlich angeordneten sowie wangenartigen Teil 37b des Rastschiebers 37 über die Ansätze 70a, 70b nunmehr vom feststehenden Schalthebel 68 gemäß Fig. 6b nach rechts gegen die Kraft der Rückstellfeder 41 bewegt wird. Dabei wird das in der Art eines U-förmigen Bügels ausgestaltete weitere Rastschieberteil 37c des Rastschiebers 37 über den Nocken 71 vom Rastschieberteil 37b ebenfalls in dieselbe Richtung bewegt, womit das Rastschieberteil 37c gleichzeitig den Rastschieber 37 am weiteren Nocken 71 verschiebt. Dadurch gibt der Rastschieber 37 den Rastsperrhebel 38 frei, wie anhand der Fig. 6a zu erkennen ist. Aufgrund der Rückstellkraft der Blattfeder 39 schwenkt der Rastsperrhebel 38 dann in die in Fig. 6a gezeigte Stellung zurück, wodurch wiederum der Schlüssel-Rasthebel 35 gemäß Fig. 7b verschwenkt werden kann. Nunmehr kann der Schlüssel 5 aus dem Schacht 57 an der Aufnahme 25 entnommen werden.

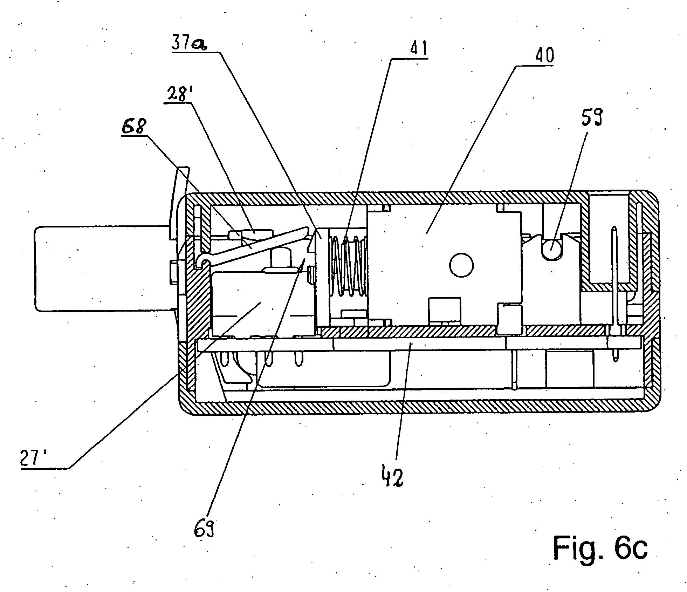

Besitzt das Kraftfahrzeug 1 ein Automatikgetriebe, so ist im Zündstartschalter 10 weiter ein in Fig. 7a gezeigter Magnet 40 zum Entriegeln der Verriegelungseinrichtung 34 angeordnet. Der Magnet 40 wirkt derart als ein sogenannter "Shift lock", daß der Schlüssel 5 erst nach Einlegen der Parkstellung P am Getriebe-Wählhebel zur Entnahme aus dem Schacht 57 sowie der Aufnahme 25 freigegeben ist. Hierzu wirkt der Magnet 40 auf den Rastschieber 37, und zwar auf das Rastschieberteil 37a ein. Gemäß Fig. 6c bewegt der Magnet 40 erst bei Bestromung aufgrund des entsprechenden Signals für den Shift lock das Rastschieberteil 37a gegen die Kraft der Rückstellfeder 41 nach rechts. Dabei läuft dann die oben beschriebene Freigabe des Schlüssels 5 zur Entnahme aus der Aufnahme 25 ab. Bei einem Kraftfahrzeug 1 mit herkömmlichem Schaltgetriebe kann gegebenenfalls auf den Magnet 40 zum Entriegeln verzichtet werden.

Hervorzuheben ist, daß die Verriegelungseinrichtung 34 nur dann wirksam ist, wenn der Schlüssel 5 in die Aufnahme 25 eingesteckt ist. Bei der KeylessGo-Funktionalität hingegen tritt keine Sperrung durch die Verriegelungseinrichtung 34 ein, da insoweit der Schlüssel 5 nicht im Schacht 57 befindlich sondern lediglich vom Benutzer 2 mitgeführt ist. In diesem Fall kann bei Verschwenkung des Betätigungsorgans 19 in Betätigungsrichtung 56 nämlich die Drehachse 58 in eine Aussparung 67 am Schacht 57 eingreifen, wie in Fig. 8a zu sehen ist. Damit bleibt der Rastsperrhebel 38 durch die Blattfeder 39 niedergehalten, womit letztendlich der Schlüssel-Rasthebel 35 vom Rastsperrhebel 38 unbeeinflußt bleibt.

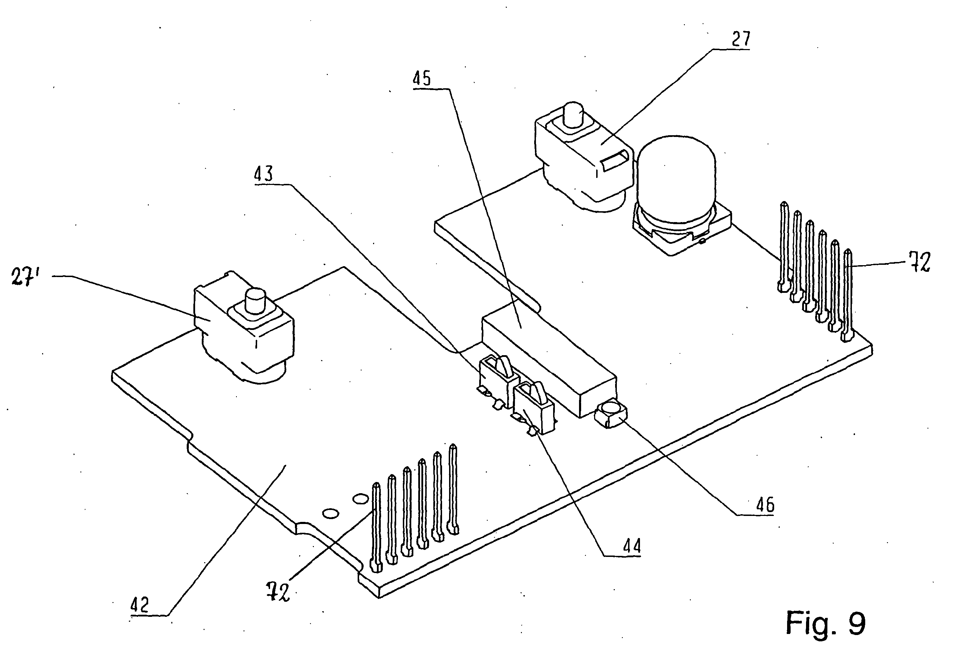

Wie in Fig. 9 gezeigt ist, ist im Zündstartschalter 10 eine Leiterplatte 42 zur Aufnahme des Schalters 27 angeordnet. Auf der Leiterplatte 42 befinden sich noch weitere Schalter, beispielsweise ein Schlüsselabzugsschalter 43, ein Schlüsselsteckt-Schalter 44 o. dgl., sowie der bereits beschriebene Schalter 27'. Desweiteren befindet sich auf der Leiterplatte 42 eine Energieübertragungsspule 45 für die induktive Übertragung von Energie vom Zündstartschalter 10 auf den Schlüssel 5, um die beschriebene direkte Betätigungsmöglichkeit des Zündstartschalters 10 zu ermöglichen. Schließlich können auf der Leiterplatte 42 noch die sonstigen für den Zündstartschalter 10 benötigten elektrischen und/oder elektronischen Bauelemente sowie die elektrischen Anschlüsse 72 für den Zündstartschalter 10 angeordnet sein.

Bei den Signalen 7 kann es sich um induktive Signale, Funksignale bzw. HF-Signale, Infrarot-Signale o. dgl. handeln. Auf der Leiterplatte 42 kann noch ein Sender/Empfänger zum Austausch des Codes 15 zwischen dem Schlüssel 5 und der Sende-/Empfangseinheit 11, falls diese im Zündstartschalter 10 befindlich ist, angeordnet sein. Für die direkte Betätigungsmöglichkeit, also wenn der Schlüssel 5 in die Aufnahme 25 eingesteckt ist, werden Infrarotsignale bevorzugt. In diesem Fall befindet sich für den Austausch des Codes 15 ein in Fig. 7a oder Fig. 8a sichtbarer Lichtleiter 47 im Zündstartschalter 10 und auf der Leiterplatte 42 ist ein Infrarot-Sender/Empfänger 46 angebracht.

Im Schlüssel 5 befindet sich ebenfalls eine in Fig. 12 gezeigte Leiterplatte 48 zur Aufnahme der elektrischen und/oder elektronischen Bauteile. Bei diesen Bauteilen kann es sich um einen Mikroprozessor 49, einen Infrarot-Sender/Empfänger 50, eine Energiespule 51 für die induktive Energieübertragung, XYZ-Spulen 52 zur Ortsbestimmung des Schlüssels 5 aufgrund des Bereichsabgrenzungssignals 13, HF-Sender/Empfänger 62, eine Batterie 53 o. dgl. handeln.

Die Erfindung ist nicht auf das beschriebene und dargestellte Ausführungsbeispiel beschränkt. Sie umfaßt vielmehr auch alle fachmännischen Weiterbildungen im Rahmen der Schutzrechtsansprüche. So kann ein derartiges Schließsystem nicht nur als Türschließund/oder Zündschloßsystem im Kraftfahrzeug oder an sonstigen Fortbewegungsmitteln eingesetzt werden. Es ist auch eine Verwendung für ein sonstiges Schloß, das sich beispielsweise als Türschloß an einer Immobilie o. dgl. befindet, möglich.

### Bezugszeichen-Liste:

- 1 :: Kraftfahrzeug
- 2:: Benutzer
- 3:: Türschließsystem
- 4:: Zündschloßsystem
- 5:: (elektronischer) Schlüssel
- 6:: Autotüre
- 7:: elektromagnetisches Signal
- 8:: Wirkbereich
- 9:: Steuergerät (für Türschließsystem)
- 10:: (elektronischer) Zündstartschalter
- 11:: Sende-/Empfangseinheit (in Kraftfahrzeug)
- 12:: Signal / Wecksignal
- 13:: Signal / Bereichsabgrenzungssignal
- 14:: Signal / Rückantwortsignal
- 15:: (codiertes) Betriebssignal / elektronischer Code
- 16:: Türgriff
- 17:: Außenraum (von Kraftfahrzeug)
- 18:: Innenraum (von Kraftfahrzeug)
- 19:: Betätigungsorgan
- 20:: Sender/Empfänger (im Schlüssel)
- 21:: Gehäuse (von Zündstartschalter)
- 22:: Halterung (für Gehäuse)
- 23:: Rastarm (für Gehäuse)
- 24:: Frontseite (von Gehäuse)
- 25:: Aufnahme (im Betätigungsorgan)
- 26:: Verschlußklappe (für Aufnahme)
- 27,27':: (elektrischer) Schalter
- 28,28':: Ansatz (am Betätigungsorgan)
- 29:: elastisches Element (zur Rückstellung des Betätigungsorgans)
- 30:: Druckfeder
- 31:: Kugel
- 32:: Nase (an Betätigungsorgan)
- 33:: Notschlüssel
- 34:: Verriegelungseinrichtung
- 35:: Schlüssel-Rasthebel
- 36:: Rasttasche (an Schlüssel)
- 37: 37a,37b,: Rastschieber
- 37c:: Rastschieberteil
- 38:: Rastsperrhebel
- 39:: Blattfeder
- 40:: Magnet
- 41:: Rückstellfeder (für Rastschieber)
- 42:: Leiterplatte (von Zündstartschalter)
- 43:: Schlüsselabzugsschalter
- 44:: Schlüsselsteckt-Schalter
- 45:: Energieübertragungsspule
- 46:: Infrarot-Sender/Empfänger
- 47:: Lichtleiter
- 48:: Leiterplatte (im Schlüssel)
- 49:: Mikroprozessor
- 50:: Infrarot-Sender/Empfänger
- 51:: Energiespule
- 52:: XYZ-Spule
- 53:: Batterie
- 54,55:: Taste (am Schlüssel)
- 56:: Betätigungsrichtung
- 56':: Gegenrichtung (zur Betätigungsrichtung)
- 57:: Schacht (an Aufnahme)
- 58:: Drehachse
- 59:: Drehlager (von Betätigungsorgan)
- 60:: Deckel (an Schlüssel)
- 61:: Verrastung (für Notschlüssel)
- 62:: HF-Sender/Empfänger
- 63:: Feder (an Verrastung)
- 64:: Armaturenbrett
- 65:: Druckfeder (an Schlüssel-Rasthebel)
- 66:: Zapfen
- 67:: Aussparung
- 68:: Schalthebel
- 69:: Sperrnase
- 70a:: Ansatz (an Rastschieberteil)
- 70b:: Ansatz (an Rastschieberteil)
- 71:: Nocken (am Rastschieber / Rastschieberteil)
- 72:: (elektrischer) Anschluß (des Zündstartschalters)

## Patentansprüche

1. Elektronischer Zündstartschalter, insbesondere in einem Kraftfahrzeug (1), zur Zusammenwirkung mit einem in der Art eines ID-Gebers, einer Chipkarte, eines Zündschlüssels o. dgl. ausgebildeten elektronischen Schlüssel (5) sowie mit einer Sende-/Empfangseinheit (11), wobei zwischen dem Schlüssel (5) und der Sende-/Empfangseinheit (11) ein einen Code (15) enthaltendes Signal (7) austauschbar ist, mit einem manuell bewegbaren Betätigungsorgan (19), wobei insbesondere das Betätigungsorgan (19) als eine in wenigstens eine Betätigungsrichtung verschwenkbare Wippe ausgebildet ist, und wobei die Betätigung des Betätigungsorgans (19) bei positiver Auswertung des ausgetauschten Codes (15) wenigstens eine vom Zündstartschalter (10) bewirkbare Funktion, wie das Einschalten von Verbrauchern im Kraftfahrzeug (1), den Betrieb des Kraftfahrzeugs (1), das Starten des Kraftfahrzeugs (1) o. dgl., freigibt und/oder auslöst, **dadurch gekennzeichnet, daß** das Betätigungsorgan (19) eine Aufnahme (25) für den elektronischen Schlüssel (5) besitzt, derart daß der elektronische Schlüssel (5) an der Aufnahme (25) in den Zündstartschalter (10) einführbar ist.

2. Elektronischer Zündstartschalter nach Anspruch 1, **dadurch gekennzeichnet, daß** das Betätigungsorgan (19) durch Bewegung in Betätigungsrichtung aus einer Ausgangsstellung bis in eine Betätigungsstellung verstellbar ist, und daß vorzugsweise das Betätigungsorgan (19) in der Betätigungsstellung schaltend auf einen elektrischen Schalter (27, 27') einwirkt.

3. Elektronischer Zündstartschalter nach Anspruch 1 oder 2, **dadurch gekennzeichnet, daß** das Betätigungsorgan (19) aus der Betätigungsstellung selbständig in die Ausgangsstellung rückstellbar ist, daß vorzugsweise die Rückstellung mittels eines auf das Betätigungsorgan (19) einwirkenden elastischen Elements (29) bewirkt wird, und daß weiter vorzugsweise das elastische Element (29) aus einer durch eine Druckfeder (30) belasteten Kugel (31) besteht, die insbesondere über eine Nase (32) mit dem Betätigungsorgan (19) zusammenwirkt.

4. Elektronischer Zündstartschalter nach Anspruch 1, 2 oder 3, **dadurch gekennzeichnet, daß** die Bewegung des Betätigungsorgans (19) durch den Benutzer (2) in Betätigungsrichtung (56) den Motor des Kraftfahrzeugs (1) startet und die Bewegung des Betätigungsorgans (19) durch den Benutzer (2) in dieselbe Betätigungsrichtung (56) den Motor des Kraftfahrzeugs (1) stoppt.

5. Elektronischer Zündstartschalter nach Anspruch 1, 2 oder 3, **dadurch gekennzeichnet, daß** die Bewegung des Betätigungsorgans (19) durch den Benutzer (2) in Betätigungsrichtung (56) den Motor des Kraftfahrzeugs (1) startet und die Bewegung des Betätigungsorgans (19) durch den Benutzer (2) in die Gegenrichtung (56') zur Betätigungsrichtung den Motor des Kraftfahrzeugs (1) abstellt.

6. Elektronischer Zündstartschalter nach einem der Ansprüche 1 bis 5, **dadurch gekennzeichnet, daß** die im Betätigungsorgan (19) befindliche Aufnahme (25) mittels einer Verschlußklappe (26) verschließbar ist.

7. Elektronischer Zündstartschalter nach einem der Ansprüche 1 bis 6, **dadurch gekennzeichnet, daß** im Zündstartschalter (10) eine Verriegelungseinrichtung (34) befindlich ist, derart daß der in die Aufnahme (25) eingeführte elektronische Schlüssel (5) nach Starten des Motors des Kraftfahrzeugs (1) von der Verriegelungseinrichtung (34) gegen Entnahme aus der Aufnahme (25) gesperrt sowie nach Abstellen des Motors des Kraftfahrzeugs (1) zur Entnahme aus der Aufnahme (25) freigegeben ist.

8. Elektronischer Zündstartschalter nach einem der Ansprüche 1 bis 7, **dadurch gekennzeichnet, daß** die Verriegelungseinrichtung (34) einen Schlüssel-Rasthebel (35) aufweist, der in eine Rasttasche (36) am Schlüssel (5) zur Verriegelung des Schlüssels (5) eingreifen kann, und daß vorzugsweise mit dem Schlüssel-Rasthebel (35) ein Rastschieber (37), ein Rastsperrhebel (38) sowie eine Blattfeder (39) zusammenwirkt.

9. Elektronischer Zündstartschalter nach einem der Ansprüche 1 bis 8, **dadurch gekennzeichnet, daß** im Zündstartschalter (10) ein Magnet (40) zum Entriegeln der Verriegelungseinrichtung (34) angeordnet ist, derart daß der Schlüssel (5) bei einem Automatikgetriebe nach Einlegen der Parkstellung P am Wählhebel zur Entnahme aus der Aufnahme (25) freigegeben ist, und daß vorzugsweise der Magnet (40) auf den Rastschieber (37) einwirkt, wobei insbesondere auf den Rastschieber (37) eine Rückstellfeder (41) einwirkt.

10. Elektronischer Zündstartschalter nach einem der Ansprüche 1 bis 9, **dadurch gekennzeichnet, daß** im Zündstartschalter (10) eine Leiterplatte (42) zur Aufnahme des Schalters (27, 27') angeordnet ist, daß vorzugsweise weitere Schalter, wie ein Schlüsselabzugsschalter (43), ein Schlüsselsteckt-Schalter (44) o. dgl., auf der Leiterplatte (42) befindlich sind, daß weiter vorzugsweise sich auf der Leiterplatte (42) eine Energieübertragungsspule (45) für die induktive Übertragung von Energie vom Zündstartschalter (10) auf den Schlüssel (5) befindet, und daß noch weiter vorzugsweise auf der Leiterplatte (42) ein Sender/Empfänger zum Austausch des Codes (15) zwischen dem Schlüssel (5) und der Sende-/Empfangseinheit (11), insbesondere mittels eines im Zündstartschalter (10) befindlichen Lichtleiters (47) sowie eines Infrarot-Sender/Empfängers (46), angebracht ist.

11. Zündschloßsystem in einem Kraftfahrzeug (1) für die Fahrberechtigung des Kraftfahrzeugs (1) in der Art einer KeylessGo-Funktionalität und/oder für die Fahrberechtigung des Kraftfahrzeugs (1) in der Art einer Schlüsselbetätigung mit einem in der Art eines ID-Gebers, einer Chipkarte, eines Zündschlüssels o. dgl. ausgebildeten elektronischen Schlüssel (5) sowie mit einem elektronischen Zündstartschalter gemäß einem der vorhergehenden Ansprüche, wobei gegebenenfalls die Sende-/Empfangseinheit (11) im Zündstartschalter (10) angeordnet ist.

12. Zündschloßsystem nach Anspruch 11, **dadurch gekennzeichnet, daß** im Schlüssel (5) eine Leiterplatte (48) zur Aufnahme der elektrischen und/oder elektronischen Bauteile, wie Mikroprozessor (49), Infrarot-Sender/Empfänger (50), Energiespule (51) zur Energieübertragung, XYZ-Spulen (52) zur Ortsbestimmung, HF-Sender/Empfänger (62), Batterie (53) o. dgl., angeordnet ist.

## Claims

1. Electronic ignition switch, in particular in a motor vehicle (1), for interacting with an electronic key (5) designed in the form of an ID sensor, a chip card, an ignition key or the like, and with a transmitting/receiving unit (11), whereby between the key (5) and the transmitting/receiving unit (11) a signal (7) containing a code (15) can be exchanged, with a manually moveable actuating member (19), whereby in particular the actuating member (19) is designed as a rocker that is pivotable in at least one actuating direction, and whereby the actuation of the actuating member (19) on a positive evaluation of the exchanged code (15) releases and/or triggers at least one function activatable by the ignition switch (10), such as switching on consumer units in the motor vehicle (1), operating the motor vehicle (1), starting the motor vehicle (1) or the like, **characterised in that** the actuating member (19) has a mount (25) for the electronic key (5) so that the electronic key (5) can be inserted on the mount (25) into the ignition switch (10).

2. Electronic ignition switch according to claim 1, **characterised in that** the actuating member (19) can be adjusted by movement in actuating direction from an initial position to an actuating position, and **in that** preferably the actuating member (19) in the actuating position has a switching effect on an electronic switch (27,27').

3. Electronic ignition switch according to claim 1 or 2, **characterised in that** the actuating member (19) can be restored automatically from the actuating position to the initial position, **in that** preferably the restoring is achieved by means of an elastic element (29) acting on the actuating member (19), and **in that** also preferably the elastic element (29) consists of a sphere (31) loaded by a compression spring (30), which cooperates with the actuating member (19) in particular via a nose (32).

4. Electronic ignition switch according to claim 1, 2, or 3, **characterised in that** the movement of the actuating member (19) in actuating direction (56) by the user (2) starts the engine of the motor vehicle (1) and the movement of the actuating member (19) by the user (2) in the same actuating direction (56) stops the engine of the motor vehicle (1).

5. Electronic ignition switch according to claim 1, 2, or 3, **characterised in that** the movement of the actuating member (19) by the user (2) in actuating direction (56) starts the engine of the motor vehicle (1) and the movement of the actuating member (19) by the user (2) in the opposite direction (56') to the actuating direction switches off the engine of the motor vehicle (1).

6. Electronic ignition switch according to one of claims 1 to 5, **characterised in that** the mount (25) located in the actuating member (19) can be closed by means of a closing flap (26).

7. Electronic ignition switch according to one of claims 1 to 6, **characterised in that** in the ignition switch (10) there is a locking device (34) so that the electronic key (5) inserted into the mount (25) is prevented from being removed from the mount (25) by the locking device (34) once the engine of the motor vehicle (1) has been started and is released after switching off the engine of the motor vehicle (1) for removal from the mount (25).

8. Electronic ignition switch according to one of claims 1 to 7, **characterised in that** the locking device (34) has a key detent lever (35) which can engage in a detent pocket (36) on the key (5) to lock the key (5), and **in that** preferably a detent slide (37), a detent locking lever (38) and a leaf spring (39) cooperate with the key detent lever (35).

9. Electronic ignition switch according to one of claims 1 to 8, **characterised in that** in the ignition switch (10) a magnet (40) is arranged for unlocking the locking device (34), so that the key (5) is released for removal out of the mount (25) in an automatic gear after inserting the park position P on the selection lever, and **in that** preferably the magnet (40) acts on the detent slide (37), whereby a restoring spring (41) acts in particular on the detent slide (37).

10. Electronic ignition switch according to one of claims 1 to 9, **characterised in that** in the ignition switch (10) a circuit board (42) is arranged for mounting the switch (27, 27'), **in that** preferably additional switches, such as a key removal switch (43), a key insertion switch (44) or the like are located on the circuit board (42), **in that** also preferably on the circuit board (42) there is an energy transmission coil (45) for the inductive transmission of energy from the ignition switch (10) to the key (5), and **in that** also preferably on the circuit board (42) there is a transmitter/receiver for exchanging the code (15) between the key (5) and the transmitting/receiving unit (11), in particular by means of a fibre-optic conductor (47) located in the ignition switch (10) and an infrared transmitter/receiver (46).

11. Ignition lock system in a motor vehicle (1) for the drive authorisation of the motor vehicle(1) in a kind of keyless-go function and/or for the drive authorisation of the motor vehicle (1) in a kind of key actuation with an electronic key (5) designed as a kind of ID sensor, chip card, ignition key or the like and with an electronic ignition switch according to one of the preceding claims, whereby if necessary the transmitting/receiving unit (11) is arranged in the ignition switch (10).

12. Ignition lock system according to claim 11, **characterised in that** in the key (5) a circuit board (48) is arranged for mounting the electric and/or electronic components such as a microprocessor (49), infrared-transmitter/receiver (50), energy coil (51) for power transmission, XYZ coils (52) for determining location, HF transmitter/receiver (62), battery (53) or the like.

## Revendications

1. Contacteur électronique d'allumage, notamment dans un véhicule automobile (1) pour coopérer avec une clé électronique (5) dans le genre d'un transmetteur d'identification, d'une carte à puce, d'une clé d'allumage ou analogue, ainsi qu'avec une unité d'émission/réception (11) pouvant échanger avec la clé (5) un signal (7) contenant un code (15), ce contacteur comportant un organe d'actionnement (19) manuel, notamment sous la forme d'un bouton pouvant basculer dans au moins un sens d'actionnement, étant précisé que l'actionnement de cet organe (19) dans le cas d'une évaluation positive du code (15) échangé, libère et/ou déclenche au moins une fonction que peut accomplir le contacteur électronique d'allumage (10) comme l'enclenchement d'utilisateurs dans le véhicule automobile (1), le fonctionnement du véhicule, le démarrage de celui-ci ou autre opération similaire,
**caractérisé en ce que**
l'organe d'actionnement (19) possède un logement (25) pour accueillir la clé électronique (5), et cette clé, dans le logement (25), est engagée dans le contacteur électronique d'allumage (10).

2. Contacteur électronique d'allumage selon la revendication 1,
**caractérisé en ce que**
l'organe d'actionnement (19), par déplacement dans le sens d'actionnement, peut passer d'une position initiale à une position d'actionnement dans laquelle cet organe (19) agit sur un contacteur électrique (27, 27') en provoquant son enclenchement.

3. Contacteur électronique d'allumage selon la revendication 1 ou 2,
**caractérisé en ce que**
l'organe d'actionnement (19) partant de sa position d'actionnement, revient automatiquement à la position initiale, son retour étant avantageusement assuré par un élément élastique (29), cet élément étant avantageusement constitué d'une bille (31), chargée par un ressort de poussée (30), et qui coopère avec l'organe d'actionnement (19) en particulier par l'intermédiaire d'un tenon (32).

4. Contacteur électronique d'allumage selon la revendication 1, 2 ou 3,
**caractérisé en ce que**
le déplacement de l'organe d'actionnement (19), effectué par le conducteur (2) dans le sens d'actionnement (56), fait démarrer le moteur du véhicule automobile (1) et le déplacement de cet organe (19) par le conducteur (2) dans le même sens d'actionnement (56) arrête le moteur du véhicule automobile (1).

5. Contacteur électronique d'allumage selon la revendication 1, 2 ou 3,
**caractérisé en ce que**
le déplacement de l'organe d'actionnement (19), effectué par le conducteur (2) dans le sens d'actionnement (56), fait démarrer le moteur du véhicule automobile (1) et le déplacement de cet organe (19) par le conducteur (2) dans le sens opposé (56') arrête le moteur du véhicule automobile (1).

6. Contacteur électronique d'allumage selon une des revendications 1 à 5,
**caractérisé en ce que**
le logement (25), dans l'organe d'actionnement (19), peut être obturé par un clapet de fermeture (26).

7. Contacteur électronique d'allumage selon une des revendications 1 à 6,
**caractérisé par**
un dispositif de verrouillage (34), dans le contacteur électronique d'allumage (10) de manière que la clé électronique (5) introduite dans le logement (25), après le démarrage du moteur du véhicule automobile (1), y reste bloquée afin de ne pas sortir du logement (25), ce blocage étant libéré après l'arrêt du moteur du véhicule automobile (1) pour permettre à la clé de sortir du logement (25).

8. Contacteur électronique d'allumage selon une des revendications 1 à 7,
**caractérisé en ce que**
le dispositif de verrouillage (34) présente un levier de blocage de clé (35) s'engageant dans une poche de blocage (36) de la clé (5) afin de la verrouiller, un tiroir de blocage (37), un levier d'arrêt à cran (38) ainsi qu'un ressort à lame (39) coopérant avantageusement avec le levier de blocage de clé (35).

9. Contacteur électronique d'allumage selon une des revendications 1 à 8,
**caractérisé en ce qu'**
un aimant (40) déverrouille le dispositif de verrouillage (34), dans le contacteur électronique d'allumage (10) de sorte que la clé (5), après engagement de la position de parking P sur le levier de sélection, est libérée par un mécanisme automatique pour être retirée du logement (25), l'aimant (40) agissant avantageusement sur le tiroir de blocage (37) sur lequel agit notamment un ressort de rappel (41).

10. Contacteur électronique d'allumage selon une des revendications 1 à 9,
**caractérisé en ce qu'**
un circuit imprimé (42) pour accueillir le contacteur (27, 27'), dans le contacteur électronique d'allumage (10) ainsi qu'avantageusement d'autres contacteurs tels qu'un contacteur d'éjection de clé (43), un contacteur d'enfoncement de clé (44) ou similaire, avantageusement aussi un circuit imprimé (42) pour accueillir une bobine de transmission d'énergie (45) pour transmettre inductivement de l'énergie du contacteur (10) à la clé (5), avantageusement encore un circuit imprimé (42) pour accueillir un émetteur/récepteur pour échanger le code (15) entre la clé (5) et l'unité d'émission/réception (11), notamment par l'intermédiaire d'un conducteur optique (47) se trouvant sur le contacteur (10) et aussi d'un émetteur/ récepteur d'infrarouges (46).

11. Système de serrure de contact dans un véhicule automobile (1) pour l'habilitation au fonctionnement de ce véhicule réalisée à la manière d'une fonctionnalité d'utilisation sans clé et/ou pour l'habilitation au fonctionnement du véhicule (1) réalisée à la manière d'un actionnement de la clé (5) au moyen d'une clé électronique dans le genre d'un générateur d'identification, d'une carte à puce, d'une clé de contact ou similaire, ce système comportant un contacteur électronique d'allumage (10) selon une des revendications précédentes, l'unité émettrice/réceptrice (11) étant éventuellement disposée dans le contacteur électronique d'allumage (10).

12. Système de serrure de contact selon la revendication 11,
**caractérisé en ce que**
la clé (5) comporte un circuit imprimé (48) pour accueillir les composants électriques et/ou électroniques, tels qu'un microprocesseur (49), un émetteur/récepteur d'infrarouges (50), une bobine (51) pour transmettre de l'énergie, des bobines X, Y, Z (52) pour déterminer la localisation, un émetteur/récepteur à haute fréquence (62), une batterie (53) ou des appareils similaires.
